# FASCICULE DE BREVET EUROPEEN

(11) **EP 4 499 482 B1**
(45) Date de publication et mention de la délivrance du brevet: **06.05.2026**
(21) Numéro de dépôt: 23709645.8
(22) Date de dépôt: 03.03.2023
(51) Int. Cl.: B62D 1/04, B60R 16/023

(54) **VOLANT DE VÉHICULE COMPRENANT UNE PLURALITÉ DE DISPOSITIFS ÉLECTRIQUES DISTINCTS**
FAHRZEUGLENKRAD MIT MEHREREN VERSCHIEDENEN ELEKTRISCHEN VORRICHTUNGEN
VEHICLE STEERING WHEEL COMPRISING A PLURALITY OF DIFFERENT ELECTRICAL DEVICES

(30) Priorité: 28.03.2022 FR 2202760
(43) Date de publication de la demande: 05.02.2025
(73) Titulaire: Autoliv Development AB, 447 83 Vårgårda (SE)
(72) Inventeur: VENDRAND, Victorien, 86000 Poitiers (FR); GUIOCHON, Leopold, 86190 Chiré-en-Montreuil (FR)
(74) Mandataire: Novagraaf International SA
(86) Numéro de dépôt international: PCT/EP2023/055435
(87) Numéro de publication internationale: WO 2023/186450

(56) Documents cités:
- DE-A1- 10 214 607
- DE-A1- 102013 000 944
- DE-A1- 102017 102 688

## Description

### Domaine technique de l'invention

La présente divulgation concerne de manière générale un volant de véhicule qui comprend une pluralité de dispositifs électriques distincts, comme par exemple des blocs ou modules électriques montés et/ou embarqués sur le volant.

### État de la technique

Il est connu dans l'art antérieur des volants de véhicule de prévoir une pluralité de dispositifs électriques distincts, comme par exemple des blocs ou modules électriques montés et/ou embarqués sur le volant. En contrepartie, il faut prévoir d'alimenter ou de connecter tous ces dispositifs électriques distincts avec un réseau de bord du véhicule. Le faisceau d'alimentation doit être prévu pour alimenter tous ces dispositifs électriques distincts localisés et montés sur le volant à différentes positions espacées les unes des autres. En conséquence, le faisceau d'alimentation est complexe et requiert un espace important pour cheminer d'un point d'alimentation amont vers tous les dispositifs électriques distincts. Le document DE 1 02013000944A1 concerne un volant de direction pour un véhicule automobile comprenant un module optique de navigation tactile, un système électronique de volant de direction et un dispositif de communication pour la transmission de données entre le module optique de navigation tactile et le système électronique de volant de direction.

### Exposé de l'invention

Un but de la présente divulgation est de répondre aux inconvénients de l'art antérieur mentionnés ci-dessus et en particulier, tout d'abord, de proposer un volant de véhicule comprenant plusieurs dispositifs électriques séparés et distincts, avec toutefois un faisceau d'alimentation compact et simple à fabriquer pour connecter tous ces dispositifs électriques séparés et distincts.

Pour cela un premier aspect de la divulgation concerne un volant de véhicule comprenant :
- au moins deux dispositifs électriques distincts,
- un faisceau d'alimentation agencé pour connecter la pluralité de dispositifs électriques distincts à un réseau de bord du véhicule,
caractérisé en ce que le faisceau d'alimentation comprend au moins un conducteur électrique commun connecté auxdits au moins deux dispositifs électriques distincts. Le conducteur électrique commun permet avec un seul câble d'alimenter ou de connecter plusieurs dispositifs électriques distincts, ce qui réduit l'encombrement et la complexité du faisceau d'alimentation.

Selon un mode de réalisation, le conducteur électrique commun peut être connecté électriquement de manière directe ou indirecte à chacun des deux dispositifs électriques distincts. On peut en particulier prévoir un chaînage et/ou un montage en parallèle des deux dispositifs électriques distincts.

Selon un mode de réalisation, le faisceau d'alimentation peut comprendre au moins deux conducteurs électriques communs connectés auxdits au moins deux dispositifs électriques distincts. Les conducteurs électriques communs permettent d'alimenter ou de connecter plusieurs dispositifs électriques distincts avec deux câbles au lieu de quatre, ce qui réduit l'encombrement et la complexité du faisceau d'alimentation.

Selon un mode de réalisation, le faisceau d'alimentation peut comprendre uniquement des conducteurs électriques communs connectés directement ou indirectement auxdits au moins deux dispositifs électriques distincts. En particulier, il peut exister au moins une section ou portion particulière du faisceau électrique d'alimentation qui ne comprend que des conducteurs électriques communs. Par exemple, une section ou portion du faisceau électrique d'alimentation (adjacente à un connecteur principal du faisceau électrique d'alimentation au réseau de bord du véhicule) peut ne comprendre que des conducteurs électriques communs connectés directement ou indirectement auxdits au moins deux dispositifs électriques distincts. Selon un mode de réalisation, le faisceau d'alimentation peut comprendre au moins une section ou portion comprenant uniquement des conducteurs électriques communs connectés directement ou indirectement auxdits au moins deux dispositifs électriques distincts.

On peut prévoir dans le cadre de la mise en œuvre ci-dessus une section ou portion du faisceau électrique d'alimentation avec uniquement des conducteurs électriques communs, selon plusieurs configurations comme ci-dessous :
- uniquement deux conducteurs électriques communs d'alimentation (« plus » et « moins »),
- deux conducteurs électriques communs d'alimentation (« plus » et « moins ») et un bus de données série,
- deux conducteurs électriques communs d'alimentation (« plus » et « moins ») et deux bus de données série,
- deux conducteurs électriques communs d'alimentation (« plus » et « moins »), dont un au moins forme un bus de données (par courant porteur en ligne par exemple),
- un seul conducteur électrique commun d'alimentation (« plus ») et chaque dispositif électrique distinct connecté à la masse (par exemple via l'armature du volant),
- et toute combinaison de ces configurations...

Selon un mode de réalisation, les dispositifs électriques distincts peuvent être localisés et/ou montés sur le volant à différentes positions espacées les unes des autres.

Selon un mode de réalisation, les dispositifs électriques distincts peuvent être indépendants les uns des autres, c'est-à-dire qu'ils peuvent être chacun monté sur le volant dans une position propre sans interaction avec les autres dispositifs électriques distincts. En particulier, plusieurs boutons de commande électriques montés sur un même bloc ou module support à attacher sur le volant peuvent former tous ensembles un seul dispositif électrique distinct et non pas chacun un dispositif électrique distinct.

Selon un mode de réalisation:
- le faisceau d'alimentation peut comprendre au moins un connecteur principal et au moins un point de dérivation,
- le connecteur principal peut être agencé pour se connecter, de préférence directement, sur le réseau de bord ou sur un point d'alimentation du volant,
- le point de dérivation peut être connecté, de préférence directement, auxdits au moins deux dispositifs électriques distincts,
le conducteur électrique commun étant agencé entre le connecteur principal et le point de dérivation.

Selon un mode de réalisation :
- le faisceau d'alimentation peut comprendre au moins un connecteur principal et au moins deux connecteurs secondaires,
- le connecteur principal peut être agencé pour se connecter, de préférence directement, sur le réseau de bord ou sur un point d'alimentation du volant,
- chaque connecteur secondaire peut être connecté, de préférence directement, à l'un desdits au moins deux dispositifs électriques distincts.

Selon un mode de réalisation, le volant de véhicule peut comprendre un connecteur tournant, dans lequel le connecteur principal forme le connecteur tournant, ou dans lequel le connecteur principal est agencé pour se connecter directement sur le connecteur tournant.

Selon un mode de réalisation, le volant de véhicule peut comprendre une unité de commande électronique, par exemple commune auxdits au moins deux dispositifs électrique distincts, dans lequel le conducteur électrique commun est directement connecté à l'unité de commande électronique. Selon ce mode de réalisation, l'unité de commande électronique est elle-même reliée ou connectée au réseau de bord, et le faisceau d'alimentation se branche en amont sur l'unité de commande électronique.

Selon l'invention, le conducteur électrique commun est agencé pour être connecté à une masse du véhicule ou à une source de courant du véhicule. Autrement dit, le conducteur commun est prévu pour faire partie d'un circuit d'alimentation des dispositifs électriques distincts auxquels il est connecté. Il faut donc prévoir de supporter la fourniture d'une puissance électrique de fonctionnement, qui peut être par exemple significative dans le cadre de dispositifs de chauffage du volant.

Selon un mode de réalisation, le conducteur électrique commun peut former un bus de communication, agencé pour former par exemple un bus informatique de données pour un réseau de contrôleurs (bus CAN « Controler Area Network), ou un bus informatique de réseau interconnecté local (bus LIN « local interconnected network ») ou un bus informatique de courants porteurs en ligne (CPL), ou un bus informatique d'un système de communication du type interface du périphérique d'extension d'horloge (CXPI - en langue anglaise : « Clock Extension Peripheral Interface (CXPI) » selon la norme ISO 20794-3:2020).

Selon un mode de réalisation, le conducteur électrique commun peut être prévu :
- pour faire partie d'un circuit d'alimentation des dispositifs électriques distincts auxquels il est connecté, et
- pour former un bus de communication afin d'échanger des données. On peut prévoir de cumuler la fonction d'alimentation électrique avec la fonction de communication, comme par exemple avec un conducteur commun d'alimentation formant un bus informatique de courants porteurs en ligne (CPL). L'alimentation peut être prévue en courant continu.

Selon un mode de réalisation, le faisceau d'alimentation peut comprendre au moins un conducteur électrique commun prévu pour offrir un échange multidirectionnel de données et une alimentation électrique des dispositifs électriques distincts auxquels il est connecté. Une telle mise en œuvre permet de simplifier l'architecture du faisceau électrique.

Selon un mode de réalisation, le faisceau d'alimentation peut comprendre deux conducteurs électriques communs.

Selon un mode de réalisation, le faisceau d'alimentation peut être prévu pour fournir une puissance d'alimentation avec une tension supérieure ou égale à 12V. Les dispositifs électriques distincts peuvent typiquement être des dispositifs de chauffage du volant. En particulier, le conducteur électrique commun peut être prévu pour fournir une puissance d'alimentation avec une tension supérieure ou égale à 12V. En particulier, le conducteur électrique commun peut être prévu pour fournir une puissance d'alimentation supérieure ou égale à 20 W, supérieure ou égale à 30 W, et supérieure ou égale à 40W.

Selon un mode de réalisation, le volant de véhicule peut comprendre une armature et une matière surmoulée sur l'armature, dans lequel au moins une portion du faisceau d'alimentation incluant une partie du conducteur électrique est noyée dans la matière surmoulée. Autrement dit, au moins une partie active du faisceau d'alimentation (une partie comprenant des câbles électrique) est surmoulée dans le volant. On peut par exemple envisager de surmouler une partie du faisceau électrique dans la jante ou dans une des branches du volant. La matière surmoulée peut être une matière plastique ou polymère, moussée ou non-moussée. On peut par exemple prévoir du polyuréthane.

Selon un mode de réalisation, le volant de véhicule peut comprendre au moins trois dispositifs électriques distincts connectés au conducteur électrique commun.

Selon un mode de réalisation, le faisceau d'alimentation peut comprendre une pluralité de conducteurs électriques en plus du conducteur électrique commun.

Selon un mode de réalisation :
- un premier dispositif électrique desdits au moins deux dispositifs électriques distincts peut être agencé dans un premier secteur angulaire du volant,
- un deuxième dispositif électrique desdits au moins deux dispositifs électriques distincts peut être agencé dans un deuxième secteur angulaire du volant distinct du premier secteur angulaire.

Selon un mode de réalisation, chaque dispositif électrique distinct peut être relié au faisceau d'alimentation par au moins deux fils ou éléments conducteurs.

Selon un mode de réalisation, chaque dispositif électrique distinct est un module indépendant.

Un deuxième aspect de la divulgation se rapporte à un véhicule automobile comprenant un volant de véhicule selon le premier aspect.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue simplifiée d'un volant de véhicule comprenant plusieurs dispositifs électriques distincts ;
[fig. 2] représente une vue simplifiée du volant de la figure 1 : après montage et connexion des dispositifs électriques distincts avec un faisceau d'alimentation, mais sans une matière surmoulée autour d'une armature du volant, ni pièces décors ;
[fig. 3] représente une vue simplifiée du faisceau d'alimentation de la figure 2 ;
[fig. 4] représente un schéma simplifié d'une première alternative d'un faisceau d'alimentation pouvant équiper le volant de véhicule de la figure 1 :
[fig. 5] représente un schéma simplifié d'une deuxième alternative d'un faisceau d'alimentation pouvant équiper le volant de véhicule de la figure 1 ;
[fig. 6] représente un schéma simplifié d'une troisième alternative d'un faisceau d'alimentation pouvant équiper le volant de véhicule de la figure 1.

### Description détaillée de mode(s) de réalisation

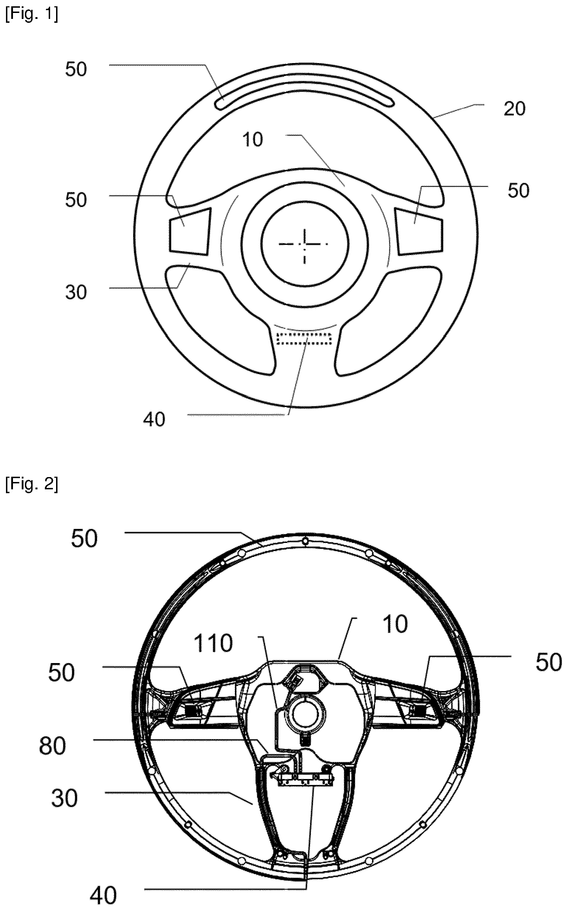

La figure 1 représente un volant de véhicule comprenant un moyeu 10, avec une jante 20 reliée au moyeu par des branches 30. Le volant est équipé d'une unité de commande électronique 40, et de plusieurs dispositifs électriques distincts 50.

Par exemple, sur la branche 30 de gauche, on peut prévoir un premier dispositif électrique distinct 50 destiné à commander un autoradio. Il peut s'agir d'un bloc ou d'un module qui comprend des boutons, et/ou des molettes, et/ou des sources lumineuses et qui est fixé sur la branche 30 de gauche. Par exemple, sur la jante 20 en partie supérieure, on peut prévoir un deuxième dispositif électrique distinct 50 sous forme d'une barre d'affichage ou barre lumineuse pour envoyer des informations au conducteur. Par exemple, sur la branche 30 de droite, on peut prévoir un troisième dispositif électrique distinct 50 destiné à commander un appareil de navigation (GPS) ou un dispositif de régulation de vitesse. Il peut s'agir d'un bloc ou d'un module qui comprend des boutons, et/ou des molettes, et/ou des sources lumineuses et qui est fixé sur la branche 30 de droite. Le bloc ou module de gauche 50 est distinct du bloc de droite 50 car les modules sont différents et nécessite des alimentions et/ou connexions différentes même s'ils peuvent être fonctionnellement reliés à même fonctionnalité dans le véhicule.

D'une manière générale, on peut prévoir pour chaque dispositif électrique distinct 50 une fixation sur le volant dédiée, sur l'armature (carcasse métallique du volant), et/ou sur un matériau de garnissage (un surmoulage polymère), et/ou sur des pièces décoratives ou d'habillage. Par ailleurs, on peut prévoir pour chaque dispositif électrique distinct 50 une fixation par clipsage, vissage, emboîtement élastique, collage, rivetage, bouterollage...

Tous ces dispositifs électriques distincts 50 doivent être reliés ou connectés au réseau électrique de bord du véhicule. A cet effet, on peut prévoir un faisceau d'alimentation 80 comme le montre la figure 2, qui représente le volant de véhicule de la figure 1 après montage et connexion des dispositifs électriques distincts 50, mais sans la matière surmoulée autour de l'armature et/ou sans les pièces décoratives.

On peut voir figure 2 les branches 30 formées par une armature métallique, l'unité de commande électronique 40 étant fixée sur le moyeu 10 en position inférieure dire « à 6h », et connectée aux dispositifs électriques distincts 50 par un faisceau d'alimentation 80 qui chemine le long de la jante 20. Dans l'exemple représenté, l'unité de commande électronique 40 est elle-même connectée par ailleurs à un joint tournant du volant via un faisceau principal 110 pour effectuer la connexion au réseau de bord du véhicule.

Autrement dit, dans le présent exemple, l'alimentation ou connexion électrique se fait selon la cascade suivante : réseau de bord véhicule, puis joint tournant, puis l'unité de commande électronique 40 via le faisceau principal 110, et enfin les dispositifs électriques distincts 50 via le faisceau d'alimentation 80. Bien sûr, on peut envisager d'autres configurations, comme par exemple connecter le faisceau d'alimentation 80 directement sur le joint tournant, ou même directement sur le réseau de bord (dans ce cas, le faisceau d'alimentation 80 comprend le joint tournant) ...

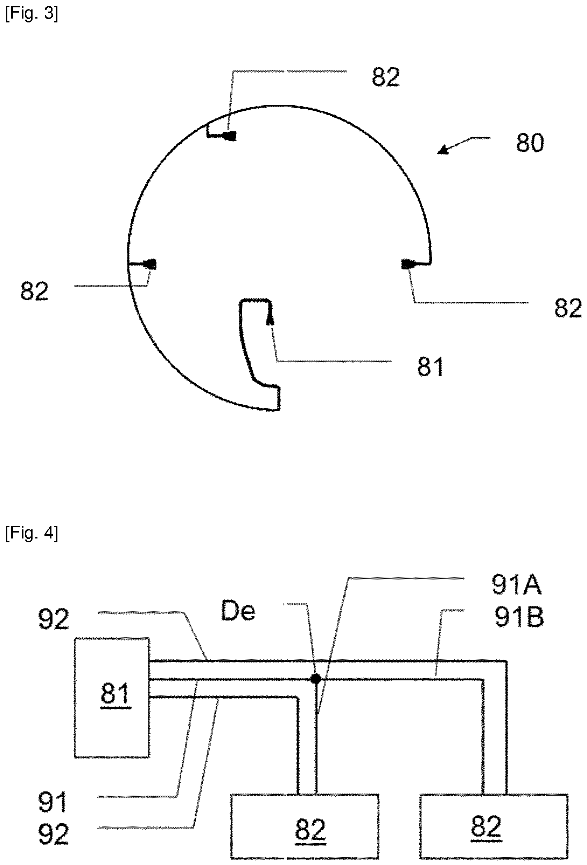

La figure 3 représente le faisceau d'alimentation 80 seul pour montrer clairement son agencement. Un connecteur principal 81 permet la connexion sur l'unité de commande électronique 40, et des connecteurs secondaire 82 permettent la connexion sur chacun des dispositifs électriques distincts 50. Le faisceau d'alimentation 80 part du connecteur principal 80 pour suivre la branche 30 inférieure, et suit ensuite la jante 20. Cependant, on peut envisager d'autres configurations, comme par exemple partir d'une des branches 30 de droite ou de gauche.

La figure 4 représente un schéma simplifié d'une première alternative d'un faisceau d'alimentation 80 pouvant équiper le volant de véhicule de la figure 1. En effet, dans cette première variante, trois câbles ou trois conducteurs électriques partent du connecteur principal 81 pour connecter deux connecteurs secondaires 82. Deux conducteurs électriques spécifiques 92 relient ou connectent chacun respectivement un des connecteurs secondaires 82. Cependant, un conducteur électrique commun 91 part du connecteur principal 81 et chemine jusqu'à un point de dérivation De. Ensuite :
- un premier conducteur électrique secondaire 91A chemine jusqu'à un premier connecteur secondaire 82 (et donc fait la connexion avec un premier dispositif électrique distinct 50), et
- un deuxième conducteur électrique secondaire 91B chemine jusqu'à un deuxième connecteur secondaire 82 (et donc fait la connexion avec un deuxième dispositif électrique distinct 50).

En conséquence, le conducteur électrique commun 91 est connecté avec deux dispositifs électriques distincts 50, directement ou indirectement. En effet, le conducteur électrique commun 91 peut tout simplement se prolonger après le point de dérivation De pour former l'un du premier conducteur électrique secondaire 91A ou du deuxième conducteur électrique secondaire 91B.

Dans cette première variante, les deux conducteurs électriques spécifiques 92 peuvent faire une alimentation électrique (pole + et pôle - ou masse), et le conducteur électrique commun 91 peut former un bus de données. On peut prévoir bien entendu d'autres configurations (typiquement la masse sur le conducteur électrique commun 91) et également des conducteurs électriques ou câbles supplémentaires.

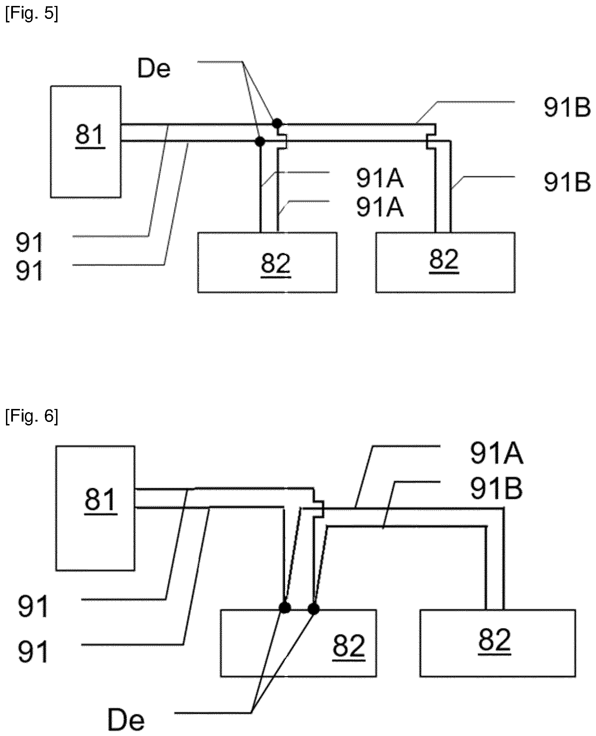

La figure 5 représente un schéma simplifié d'une deuxième alternative du faisceau d'alimentation de la figure 3. En effet, dans cette deuxième variante, deux conducteurs électriques communs 91 partent du connecteur principal 81 et cheminent chacun jusqu'à un point de dérivation De. Ensuite, de chaque point de dérivation De :
- deux premiers conducteurs électriques secondaires 91A cheminent jusqu'à un premier connecteur secondaire 82 (et donc font la connexion avec un premier dispositif électrique distinct 50), et
- deux deuxièmes conducteurs électriques secondaires 91B cheminent jusqu'à un deuxième connecteur secondaire 82 (et donc font la connexion avec un deuxième dispositif électrique distinct 50).

En conséquence, les conducteurs électriques communs 91 sont connectés avec deux dispositifs électriques distincts 50, directement ou indirectement. En effet, chaque conducteur électrique commun 91 de la figure 5 peut tout simplement se prolonger après son point de dérivation De pour former l'un ou l'autre des premiers conducteurs électriques secondaires 91A ou l'un ou l'autre des deuxièmes conducteurs électriques secondaires 91B.

Dans cette deuxième variante, les deux conducteurs électriques commun 91 peuvent procurer une alimentation électrique (pole + et pôle - ou masse), et/ou un ou plusieurs bus de données (par courant porteur par exemple). On peut prévoir bien entendu d'autres configurations et également des conducteurs électriques ou câbles supplémentaires.

La figure 6 représente un schéma simplifié d'une troisième alternative du faisceau d'alimentation de la figure 3. En effet, dans cette troisième variante, deux conducteurs électriques communs 91 partent du connecteur principal 81 et cheminent chacun jusqu'à deux points de dérivation De directement intégrés dans un connecteur secondaire 82 (et donc font la connexion avec un premier dispositif électrique distinct 50). Ensuite, de chaque point de dérivation De ou du connecteur secondaire 82 en question :
- un premier conducteur électrique secondaire 91A chemine jusqu'à un deuxième connecteur secondaire 82 (et donc fait la connexion avec un deuxième dispositif électrique distinct 50), et
- un deuxième conducteur électrique secondaire 91B chemine jusqu'au deuxième connecteur secondaire 82 (et donc fait la connexion avec le deuxième dispositif électrique distinct 50).

En conséquence, les conducteurs électriques communs 91 sont connectés avec deux dispositifs électriques distincts 50, directement ou indirectement. En effet, chaque conducteur électrique commun 91 de la figure 6 peut tout simplement se prolonger après son point de dérivation De pour former l'un du premier conducteur électrique secondaire 91A ou du deuxième conducteur électrique secondaire 91B. Cette alternative simplifie la réalisation des points de dérivation De.

Dans cette troisième variante, les deux conducteurs électriques commun 91 peuvent procurer une alimentation électrique (pole + et pôle - ou masse), et/ou un ou plusieurs bus de données (par courant porteur par exemple). On peut prévoir bien entendu d'autres configurations et également des conducteurs électriques ou câbles supplémentaires.

En résumé des figures 5, et 6, le faisceau électrique comprend, au moins dans la portion adjacente au connecteur principal 81, uniquement des conducteurs électriques communs. On pourrait même n'avoir qu'un seul conducteur d'alimentation, si chaque dispositif électrique distinct est relié à l'armature du volant pour la masse (ou a un conducteur qui ne fait pas partie du faisceau électrique).

Dans l'esprit des mises en œuvres des figures 5 et 6, on pourrait avoir, au moins dans la portion adjacente au connecteur principal 81 :
- uniquement deux conducteurs électriques communs d'alimentation (« plus » et « moins »),
- uniquement deux conducteurs électriques communs d'alimentation (« plus » et « moins ») et un bus de données série,
- uniquement deux conducteurs électriques communs d'alimentation (« plus » et « moins ») et deux bus de données série,
- uniquement deux conducteurs électriques communs d'alimentation (« plus » et « moins »), dont un au moins forme un bus de données (par courant porteur en ligne par exemple),
- uniquement un seul conducteur électrique commun d'alimentation (« plus ») et chaque dispositif électrique distinct connecté à la masse (par exemple via l'armature du volant), avec éventuellement un ou plusieurs bus de données.

### Application industrielle

Un volant de véhicule selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut prévoir tous types de connexion pour connecter le faisceau électrique 80 : des connecteurs réversibles, des connecteurs indémontables, des jonctions par soudure, des jonctions par contact sous pression...

On peut prévoir deux, trois, quatre ou plus dispositifs électriques distincts. On peut prévoir qu'un même connecteur mécanique du faisceau d'alimentation se connecte sur deux dispositifs électriques distincts (c'est-à-dire qui se montent indépendamment l'un de l'autre sur le volant, mais qui sont suffisamment proches pour n'utiliser qu'un connecteur électrique).

## Revendications

1. Volant de véhicule comprenant :
- au moins deux dispositifs électriques distincts (50),
- un faisceau d'alimentation (80) agencé pour connecter la pluralité de dispositifs électriques distincts (50) à un réseau de bord du véhicule, **caractérisé en ce que** le faisceau d'alimentation (80) comprend au moins un conducteur électrique commun (91) connecté auxdits au moins deux dispositifs électriques distincts (50),
dans lequel le conducteur électrique commun (91) est agencé pour être connecté à une masse du véhicule ou à une source de courant du véhicule.

2. Volant de véhicule selon la revendication 1, dans lequel le faisceau d'alimentation (80) comprend au moins deux conducteurs électriques communs (91) connectés auxdits au moins deux dispositifs électriques distincts (50).

3. Volant de véhicule selon la revendication 1 ou 2, dans lequel :
- le faisceau d'alimentation (80) comprend au moins un connecteur principal (81) et au moins un point de dérivation,
- le connecteur principal (81) est agencé pour se connecter, de préférence directement, sur le réseau de bord ou sur un point d'alimentation du volant,
- le point de dérivation est connecté, de préférence directement, auxdits au moins deux dispositifs électriques distincts (50),
le conducteur électrique commun (91) étant agencé entre le connecteur principal (81) et le point de dérivation.

4. Volant de véhicule selon la revendication 1 ou 2, dans lequel :
- le faisceau d'alimentation (80) comprend au moins un connecteur principal (81) et au moins deux connecteurs secondaires (82),
- le connecteur principal (81) est agencé pour se connecter, de préférence directement, sur le réseau de bord ou sur un point d'alimentation du volant,
- chaque connecteur secondaire (82) est connecté, de préférence directement, à l'un desdits au moins deux dispositifs électriques distincts (50).

5. Volant de véhicule selon l'une des revendications 3 à 4, comprenant un connecteur tournant, dans lequel le connecteur principal (81) forme le connecteur tournant, ou dans lequel le connecteur principal (81) est agencé pour se connecter directement sur le connecteur tournant.

6. Volant de véhicule selon l'une des revendications 3 à 4 comprenant une unité de commande électronique (40), dans lequel le conducteur électrique commun (91) est directement connecté à l'unité de commande électronique (40).

7. Volant de véhicule selon l'une des revendications 1 à 6, dans lequel le conducteur électrique commun (91) forme un bus de communication, agencé pour former par exemple un bus informatique de données pour un réseau de contrôleurs (bus CAN « Controler Area Network), ou un bus informatique de réseau interconnecté local (bus LIN « local interconnected network ») ou un bus informatique de courants porteurs en ligne (CPL), ou un bus informatique d'un système de communication du type interface du périphérique d'extension d'horloge (CXPI).

8. Volant de véhicule selon l'une des revendications 1 à 7, comprenant une armature et une matière surmoulée sur l'armature, dans lequel au moins une portion du faisceau d'alimentation (80) incluant une partie du conducteur électrique est noyée dans la matière surmoulée.

9. Volant de véhicule selon l'une des revendications 1 à 8, comprenant au moins trois dispositifs électriques distincts (50) connectés au conducteur électrique commun (91).

10. Volant de véhicule selon l'une des revendications 1 à 9, dans lequel le faisceau d'alimentation (80) comprend une pluralité de conducteurs électriques en plus du conducteur électrique commun (91).

11. Volant de véhicule selon l'une des revendications 1 à 10, dans lequel :
- un premier dispositif électrique desdits au moins deux dispositifs électriques distincts (50) est agencé dans un premier secteur angulaire du volant,
- un deuxième dispositif électrique desdits au moins deux dispositifs électriques distincts (50) est agencé dans un deuxième secteur angulaire du volant distinct du premier secteur angulaire.

12. Volant de véhicule selon l'une des revendications 1 à 11, dans lequel chaque dispositif électrique distinct (50) est relié au faisceau d'alimentation (80) par au moins deux fils ou éléments conducteurs.

13. Volant de véhicule selon l'une des revendications 1 à 12, dans lequel chaque dispositif électrique distinct (50) est un module indépendant.

14. Véhicule automobile comprenant un volant de véhicule selon l'une des revendications 1 à 13.

## Patentansprüche

1. Fahrzeuglenkrad, umfassend:
- mindestens zwei verschiedene elektrische Vorrichtungen (50),
- ein Versorgungskabelbaum (80), der zum Verbinden der Vielzahl von verschiedenen elektrischen Vorrichtungen (50) mit einem Bordnetz des Fahrzeugs angeordnet ist,
**dadurch gekennzeichnet, dass** der Versorgungskabelbaum (80) mindestens einen gemeinsamen elektrischen Leiter (91) umfasst, der mit den mindestens zwei verschiedenen elektrischen Vorrichtungen (50) verbunden ist,
wobei der gemeinsame elektrische Leiter (91) angeordnet ist, um mit einer Masse des Fahrzeugs oder mit einer Stromquelle des Fahrzeugs verbunden zu werden.

2. Fahrzeuglenkrad nach Anspruch 1, wobei der Versorgungskabelbaum (80) mindestens zwei gemeinsame elektrische Leiter (91) umfasst, die mit den mindestens zwei verschiedenen elektrischen Vorrichtungen (50) verbunden sind.

3. Fahrzeuglenkrad nach Anspruch 1 oder 2, wobei:
- der Versorgungskabelbaum (80) mindestens einen Hauptverbinder (81) und mindestens einen Ableitungspunkt umfasst,
- der Hauptverbinder (81) angeordnet ist, um sich vorzugsweise direkt mit dem Bordnetz oder mit einem Versorgungspunkt des Lenkrads zu verbinden,
- der Ableitungspunkt vorzugsweise direkt mit den mindestens zwei verschiedenen elektrischen Vorrichtungen (50) verbunden ist,
der gemeinsame elektrische Leiter (91) zwischen dem Hauptverbinder (81) und dem Ableitungspunkt angeordnet ist.

4. Fahrzeuglenkrad nach Anspruch 1 oder 2, wobei:
- der Versorgungskabelbaum (80) mindestens einen Hauptverbinder (81) und mindestens zwei Sekundärverbinder (82) umfasst,
- der Hauptverbinder (81) angeordnet ist, um sich vorzugsweise direkt mit dem Bordnetz oder mit einem Versorgungspunkt des Lenkrads zu verbinden,
- jeder Sekundärverbinder (82) vorzugsweise direkt mit einem der mindestens zwei verschiedenen elektrischen Vorrichtungen (50) verbunden ist.

5. Fahrzeuglenkrad nach einem der Ansprüche 3 bis 4, umfassend einen Drehverbinder, wobei der Hauptverbinder (81) den Drehverbinder ausbildet, oder wobei der Hauptverbinder (81) angeordnet ist, um sich direkt mit dem Drehverbinder zu verbinden.

6. Fahrzeuglenkrad nach einem der Ansprüche 3 bis 4, umfassend eine elektronische Steuereinheit (40), wobei der gemeinsame elektrische Leiter (91) mit der elektronischen Steuereinheit (40) direkt verbunden ist.

7. Fahrzeuglenkrad nach einem der Ansprüche 1 bis 6, wobei der gemeinsame elektrische Leiter (91) einen Kommunikationsbus ausbildet, der beispielsweise zum Ausbilden eines Datenverarbeitungsbusses von Daten für ein Steuerungsnetz (CAN-Bus "Controller Area Network") oder eines Datenverarbeitungsbusses für ein lokales Verbundnetz (LIN-Bus "Local Interconnected Network") oder eines Datenverarbeitungsbusses für Powerline-Kommunikation (PLC) oder eines Datenverarbeitungsbusses eines Kommunikationssystems vom Typ Takterweiterungs-Schnittstelle (CXPI) angeordnet ist.

8. Fahrzeuglenkrad nach einem der Ansprüche 1 bis 7, umfassend eine Armatur und ein um die Armatur spritzgegossenes Material, wobei mindestens ein Abschnitt des Versorgungskabelbaums (80) einschließlich eines Teils des elektrischen Leiters in dem spritzgegossenen Material eingebettet ist.

9. Fahrzeuglenkrad nach einem der Ansprüche 1 bis 8, umfassend mindestens drei verschiedene elektrische Vorrichtungen (50), die mit dem gemeinsamen elektrischen Leiter (91) verbunden sind.

10. Fahrzeuglenkrad nach einem der Ansprüche 1 bis 9, wobei der Versorgungskabelbaum (80) eine Vielzahl von elektrischen Leitern zusätzlich zu dem gemeinsamen elektrischen Leiter (91) umfasst.

11. Fahrzeuglenkrad nach einem der Ansprüche 1 bis 10, wobei:
- eine erste elektrische Vorrichtung der mindestens zwei verschiedenen elektrischen Vorrichtungen (50) in einem ersten Winkelsektor des Lenkrads angeordnet ist,
- eine zweite elektrische Vorrichtung der mindestens zwei verschiedenen elektrischen Vorrichtungen (50) in einem zweiten Winkelsektor des Lenkrads angeordnet ist, der sich von dem ersten Winkelsektor unterscheidet.

12. Fahrzeuglenkrad nach einem der Ansprüche 1 bis 11, wobei jede verschiedene elektrische Vorrichtung (50) mit dem Versorgungskabelbaum (80) durch mindestens zwei Drähte oder Leiterelemente verbunden ist.

13. Fahrzeuglenkrad nach einem der Ansprüche 1 bis 12, wobei jede verschiedene elektrische Vorrichtung (50) ein unabhängiges Modul ist.

14. Kraftfahrzeug, umfassend ein Fahrzeuglenkrad nach einem der Ansprüche 1 bis 13.

## Claims

1. Vehicle steering wheel, comprising:
- at least two separate electrical devices (50),
- a power harness (80) arranged to connect the plurality of separate electrical devices (50) to an on-board electrical system of the vehicle,
**characterized in that** the power harness (80) comprises at least one common electrical conductor (91) connected to said at least two separate electrical devices (50),
the common electrical conductor (91) being arranged to be connected to a ground of the vehicle or to a power source of the vehicle.

2. Vehicle steering wheel according to claim 1, wherein the power harness (80) comprises at least two common electrical conductors (91) connected to said at least two separate electrical devices (50).

3. Vehicle steering wheel according to claim 1 or 2, wherein:
- the power harness (80) comprises at least one main connector (81) and at least one branch point,
- the main connector (81) is arranged to connect, preferably directly, to the on-board electrical system or to a power supply point on the steering wheel,
- the branch point is connected, preferably directly, to said at least two separate electrical devices (50),
the common electrical conductor (91) being arranged between the main connector (81) and the branch point.

4. Vehicle steering wheel according to claim 1 or 2, wherein:
- the power harness (80) comprises at least one main connector (81) and at least two secondary connectors (82),
- the main connector (81) is arranged to connect, preferably directly, to the on-board electrical system or to a power supply point on the steering wheel,
- each secondary connector (82) is connected, preferably directly, to one of said at least two separate electrical devices (50).

5. Vehicle steering wheel according to any of claims 3 to 4, comprising a rotary connector, wherein the main connector (81) forms the rotary connector, or wherein the main connector (81) is arranged to connect directly to the rotary connector.

6. Vehicle steering wheel according to any of claims 3 to 4, comprising an electronic control unit (40), wherein the common electrical conductor (91) is directly connected to the electronic control unit (40).

7. Vehicle steering wheel according to any of claims 1 to 6, wherein the common electrical conductor (91) forms a communication bus arranged to form, for example, a data computer bus for a controller network (CAN, "controller area network", bus), or a local interconnect network computer bus (LIN, "local interconnect network", bus) or a powerline communication (PLC) computer bus, or a computer bus of a clock extension peripheral interface (CXPI) communication system.

8. Vehicle steering wheel according to any of claims 1 to 7, comprising a frame and a material overmolded onto the frame, wherein at least a portion of the power harness (80) including part of the electrical conductor is embedded in the overmolded material.

9. Vehicle steering wheel according to any of claims 1 to 8, comprising at least three separate electrical devices (50) connected to the common electrical conductor (91).

10. Vehicle steering wheel according to any of claims 1 to 9, wherein the power harness (80) comprises a plurality of electrical conductors in addition to the common electrical conductor (91).

11. Vehicle steering wheel according to any of claims 1 to 10, wherein:
- a first electrical device from said at least two separate electrical devices (50) is arranged in a first angular sector of the steering wheel,
- a second electrical device from said at least two separate electrical devices (50) is arranged in a second angular sector of the steering wheel that is different from the first angular sector.

12. Vehicle steering wheel according to any of claims 1 to 11, wherein each separate electrical device (50) is connected to the power harness (80) by at least two wires or conductive elements.

13. Vehicle steering wheel according to any of claims 1 to 12, wherein each separate electrical device (50) is an independent module.

14. Motor vehicle comprising a vehicle steering wheel according to any of claims 1 to 13.
